# EUROPEAN PATENT SPECIFICATION

(11) **EP 3 151 497 B1**
(45) Date of publication and mention of the grant of the patent: **07.08.2019**
(21) Application number: 14893609.9
(22) Date of filing: 29.12.2014
(51) Int. Cl.: H04L 27/26, H04L 5/00

(54) **SIGNALLING FIELD OF WIRELESS MIMO COMMUNICATION SYSTEM AND COMMUNICATION METHOD THEREOF**
SIGNALISIERUNGSFELD EINES DRAHTLOSEN MIMO-KOMMUNIKATIONSSYSTEMS UND KOMMUNIKATIONSVERFAHREN DAFÜR
CHAMP DE SIGNALISATION DE SYSTÈME DE COMMUNICATION MIMO SANS FIL ET PROCÉDÉ DE COMMUNICATION ASSOCIÉ

(30) Priority: 30.05.2014 CN 201410239319
(43) Date of publication of application: 05.04.2017
(73) Proprietor: ZTE Wavetone Science And Technology Ltd., Nanjing, Jiangsu 211100 (CN)
(72) Inventor: WANG, Haiming, Nanjing Jiangsu 211100 (CN); HE, Shiwen, Nanjing Jiangsu 211100 (CN); HUANG, Yongming, Nanjing Jiangsu 211100 (CN); YU, Guangshi, Nanjing Jiangsu 211100 (CN); HONG, Wei, Nanjing Jiangsu 211100 (CN); ZHANG, Jun, Nanjing Jiangsu 211100 (CN)
(74) Representative: Hanna Moore + Curley
(86) International application number: PCT/CN2014/095443
(87) International publication number: WO 2015/180465

(56) References cited:
- WO-A1-2012/121676
- CN-A- 101 399 631
- CN-A- 102 932 091
- CN-A- 103 986 682
- US-A1- 2008 144 498
- US-A1- 2008 298 435
- US-A1- 2012 287 915
- US-A1- 2013 315 219

## Description

### TECHNICAL FIELD

The present invention belongs to the technical field of wireless communication, and more particularly, relates to a signaling method of a wireless multiple input multiple output (MIMO) communication system and a communication method thereof.

### BACKGROUND

As wireless communication spectrum resources are increasingly scare and a ultra-high-speed data transmission rate is demanded, millimeter wave band ultra-high-speed wireless communication technology has attracted more and more attention as one of wireless communication technologies with the highest potential in the future.

The 45 GHz frequency band MIMO (Multiple Input Multiple Output, MIMO) wireless communication technology belongs to a millimeter wave communication technology, is suitable for applications such as ultra-high speed wireless access, and can realize 10Gbps ultra-high-speed wireless transmission between devices. Compared with the low frequency band, the millimeter wave has the following features of: (1) wide available spectrum range and large channel capacity; (2) easy implementation of narrow beam and high gain antenna; therefore, the resolution is high and the anti-jamming performance is excellent.

As a popular technical method to enhance the capacity of a communication system, the MIMO technology has been adopted by IEEE 802.11n and IEEE802.11ac wireless communication standards.

A MIMO communication system uses N_{T} transmitting antennas and N_{R} receiving antennas to transmit data services. A MIMO channel formed by N_{T} transmitting antennas and N_{R} receiving antennas can be disintegrated into Ns independent channels, also called as Ns space channels, wherein Nₛ≤min{N_{T}, N_{R}}. Each channel in N_{S} space channels corresponds to a dimension. If additional dimensions created by a plurality of transmitting and receiving antennas are used, then the MIMO system can provide improved performance, such as, having higher throughput and/or higher reliability.

In an uplink or a downlink of a wireless network having a single access point (AP) and a plurality of subscriber stations (STAs), simultaneous data transmission on a plurality of channels pointing to different stations are likely to result in many challenges.

In IEEE 802.11ac, the implementation of a dynamic bandwidth system has high cost and is very complex, so that the common use of a service field and a media access control layer (Media Access Control, MAC) address field is required in order to achieve the dynamic bandwidth. Moreover, when the primary channel is interfered, a dynamic bandwidth mechanism of IEEE 802.11ac determines that the configuration of dynamic bandwidth fails to be reached.

The document US 2013/0315219 A1 discloses an apparatus and method of indicating a bandwidth in a wireless communication system. The document US 2008/298435 A1 discloses a matched filter configured for matching an input signal to a plurality of programmable-length complementary Golay-Code pairs.

### SUMMARY

The object of the invention: the object of the present invention is to provide a signaling field capable of realizing dynamic bandwidth configuration, multi-carrier mode configuration and multi-user and multi-spatial stream configuration.

Technical solution: the present invention provides a method as detailed in the claims that follow.

Working principle: the invention directly configures the dynamic bandwidth in a signaling field A or a signaling field B for a millimeter wave frequency band wireless MIMO communication system, mainly by adopting a plurality of 3 subfields in the signaling field A to realize the configuration of dynamic bandwidth. The dynamic bandwidth of the present invention is configured as a mechanism that can be configured in a mode of using a fixed bandwidth or configured in a mode of using a dynamic bandwidth. When the dynamic bandwidth is configured in the mode of dynamic bandwidth, various options are as follows: a BMHz bandwidth refers to a specific channel bandwidth. When the channel condition is good, a 2BMHz channel bandwidth is used, and when the 2BMHz channel bandwidth is used, a user can freely decide whether or not to use the 2BMHz channel bandwidth at all. That is, a primary BMHz channel bandwidth can be used at this moment, a secondary BMHz channel bandwidth can be used, or a full 2BMHz channel bandwidth can be used. When the channel environment is bad, the primary BMHz channel bandwidth and the secondary BMHz channel bandwidth can be dynamically switched in a direct manner. It is described in another way when the secondary channel is interfered, the primary channel can be used for transmitting; when the primary channel is interfered and is not available, the secondary channel can be used for transmitting.

A length (Length) subfield in the signaling field A is defined to configure to transmit the data length in the present invention. No length (Length) field in the signaling field A in IEEE802.11.ac is configured to transmit the data length, and the signaling field B is required to transmitted for both single-user and multi-user. Different from the IEEE 802.11.ac, in the case of a single-user, the present invention only transmits the signaling field A and does not transmit the signaling field B, which improves the transmission efficiency; in the case of multi-user, the signaling field A defines the length (Length) subfield to configure to transmit the maximum data length of each user, and the signaling field B defines the length (Length) subfield to configure to transmit the data length of each user.

Advantageous effect: compared with the prior art, the present invention not only makes the achievement of a dynamic bandwidth simpler and more flexible, but also effectively improves the spectrum efficiency.

### BRIEF DESCRIPTION OF THE DRAWINGS

Fig. 1 is a schematic diagram of a wireless communication network of the present invention;
Fig. 2 is a schematic diagram of an access point and two user terminals in an MIMO system;
Fig. 3 is a configuration block diagram of using a transmission communication device provided by the present invention;
Fig. 4 is another configuration block diagram of using a transmission communication device provided by the present invention;
Fig. 5 is a schematic diagram of a frame structure of a wireless MIMO communnication system disclosed by the present invention in the case of a single-user;
Fig. 6 is a schematic diagram of a frame structure of a wireless MIMO communication system disclosed by the present invention in the case of multi-user;
Fig. 7 refers to a structure of a signaling field A disclosed by the present invention;
Fig. 8 refers to a structure of a signaling field B disclosed by the present invention;
Fig. 9 is a flow chart of a dynamic bandwidth configuration method in a field format of a signaling field A;
Fig. 10 is a flow chart of a dynamic bandwidth configuration method in a field format of another signaling field A; and
Fig. 11 is a typical drawing of a channel bandwidth during multi-user communication in the present invention.

### DETAILED DESCRIPTION

Examples of a communication device comprise cellular telephone base stations or nodes, access points, wireless gateways, and wireless routers. The communication device may be operated in accordance with specific industry standards, and the method and device of the present invention comply with the IEEE 802.11aj. Although some of the systems and methods disclosed herein may be described in terms of one or more standards, this does not limit the scope of the present invention because these systems and methods may be applicable to many systems and standards.

Some communication devices can be wirelessly communicated with other communication devices. Some communication devices may be called as base stations, mobile devices, mobile stations, or the like. Additional examples of communication devices comprise laptop or desktop computers, cellular telephones, smart phones, wireless modems, electronic readers, or the like. Some of these communication devices may be operated in accordance with one or more industry standards as described above. Thus, the general term "communication device" may comprise a communication device that is described by a varied name according to the industrial standard.

Some communication devices can provide access to a communication network. Examples of communication networks include, but are not limited to, a telephone network, the Internet, a wireless local area network, or the like.

The techniques described in the present invention can be applied to various wideband wireless communication systems. Examples of such communication system include a millimeter wave ultra-high-speed wireless communication system or the like.

The method of the present invention may be implemented in a variety of wired or wireless devices; and in some aspects, a wireless node implemented according to the methods herein may include an access point or an access terminal.

The access point (AP) may include a base station transceiver, a base station, a transceiver function, a wireless router, a wireless transceiver, a basic service set (BSS), an extended service set (ESS) or some other terms.

A user terminal (UT) may include an access terminal, a subscriber station, a subscriber unit, a mobile station, a user terminal, a user device, user equipment, or some other terms. In some implementations, the access terminal may include a telephone, a handset, a computer, or the like having wireless connectivity capabilities.

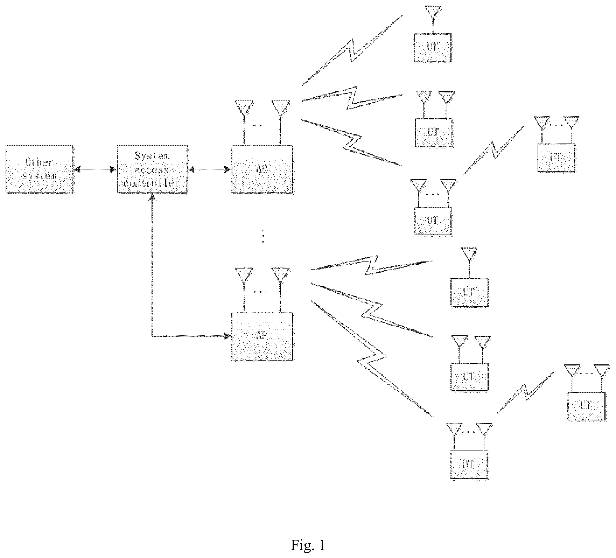

Fig. 1 refers to a multi-address multiple input and output (MIMO) system having an access point and a user terminal. At any given time, the access point may be communicated with one or more user terminals on a downlink and an uplink. The downlink is a communication link from the access point to the user terminal, and the uplink is a communication link from the user terminal to the access point. The user terminal may also be communicated with the other user terminal in a point-to-point manner. A system access controller is connected to the access point and coordinates and controls the access point.

A plurality of transmitting antennas and a plurality of receiving antennas in the system are used for data transmission on the downlink and the uplink. The user terminal may be equipped with one or more antennas.

The MIMO system may be a time division duplex (Time Division Duplex, abbreviated as TDD) system or a frequency division duplex (Frequency Division Duplex, abbreviated as FDD) system. For the TDD system, the same frequency band is shared on the downlink and the uplink. For the FDD system, the different frequency bands are used on the downlink and the uplink. A single carrier or multi-carrier can also be used for transmitting in the MIMO system.

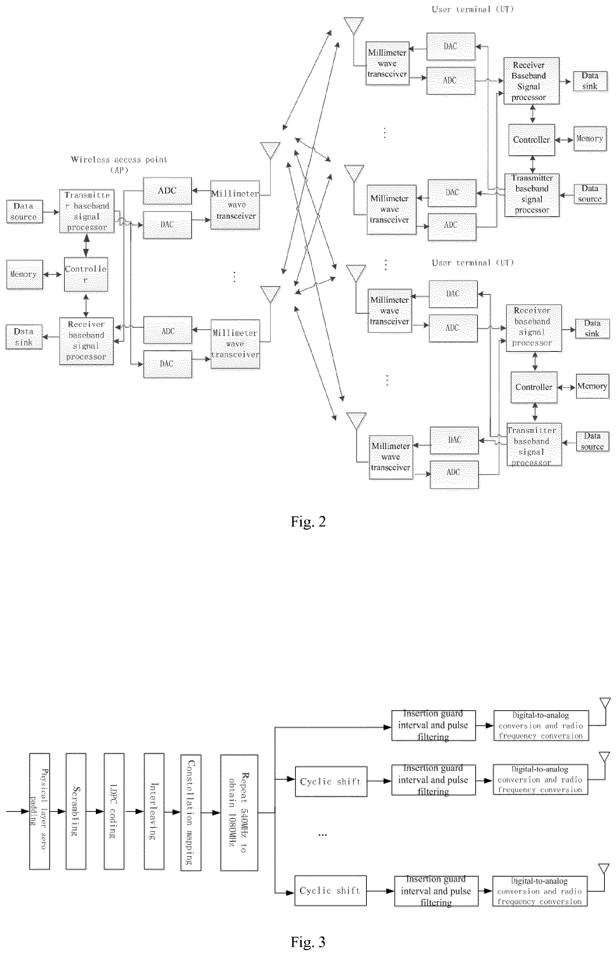

Fig. 2 refers to a block diagram of an access point and two user terminals in a MIMO system, the access point being provided with N antennas, the user terminal 1 being provided with N antennas, and the user terminal 2 being provided with N antennas. The access point is a transmitting entity for the downlink and a receiving entity for the uplink. The "transmitting entity" described herein refers to a device or equipment capable of independent operation of transmitting data over a wireless channel, and the "receiving entity) refers to a device or device capable of independent operation of receiving data over a wireless channel.

On the uplink, and at each selected user terminal transmitted for the uplink, a transmitting baseband signal processor receives business data from the data source and control data from the controller. The transmitting baseband signal processor processes the business data of the user terminal, such as scrambling, coding, interleaving, and modulation, based on coding and modulation schemes associated with the rate selected for the user terminal; and provides data symbol streams, then performs spatial processing for the stream of data symbols and provides N transmitting symbol streams for N antennas. A digital-to-analog converter converts the transmitted symbol stream digital signal into an analog baseband signal, and respective transmitting symbol stream are received and processed by a transmitter unit of each millimeter wave transceiver, such as, amplification, filtering, and frequency up-conversion and power amplification to generate an uplink signal.

At the receiving point, the N antennas receive uplink signals transmitted by all user terminals on the uplink, each antenna providing the received signals to receiver units of the respective millimeter wave transceivers. Each receiver unit performs a process complementary to that performed by a user terminal transmitting unit, and a digital symbol stream received is provided by the signal received after passing through the analog-to-digital converter. A receiving baseband signal processor of the access point performs receiver spatial processing on the symbol stream received and provides N recovered uplink symbol streams. The receiver spatial processing is performed according to channel correlation matrix inversion, minimum mean square error, soft interference cancellation, or some other technologies. Each recovered uplink data signal symbol stream is an estimate of the data symbol stream transmitted by the corresponding user terminal. The stream is then processed according to the rate used for each recovered uplink data symbol stream to obtain decoded data. The decoded data for each user terminal may be provided to a data sink for memory and/or a controller for further processing.

On the downlink, and at the access point, the transmitting baseband signal processor receives the business data from the data source of the user terminal scheduled for the downlink transmission and the control data from the controller. Various types of data can be transmitted on different transmission channels. The transmitting baseband signal processor processes the business data of the user terminal based on a rate selected for each user terminal, for example, scrambling, coding, interleaving, and modulation. The transmitting baseband signal processor provides a downlink data symbol stream, then performs spatial processing on the data symbol stream, and provides N transmitting symbol streams for the N antennas. A digital-to-analog converter converts the transmitted symbol stream digital signal into an analog baseband signal, and respective transmitting symbol stream are received and processed by a transmitter unit of each millimeter wave transceiver, such as, amplification, filtering, and frequency up-conversion and power amplification to generate a downlink signal.

At each user terminal, a downlink signal is received by the N antennas from the access point. Each antenna provides the signal received for a receiver unit of the respective millimeter wave transceiver. The signal output by the receiver unit passes through the analog-to-digital converter to provide the digital symbol stream received. A receiving baseband signal processor of the user terminal performs receiver spatial processing on the symbol stream received and provides N recovered downlink symbol streams for the user terminal. The receiver spatial processing is performed according to channel correlation matrix inversion, minimum mean square error, soft interference cancellation, or some other technologies. The receiving baseband signal processor processes the stream based on a rate used for each recovered downlink data symbol stream to obtain the decoded data for the user terminal, such as, demodulation, deinterleaving, and decoding.

The receiving baseband signal processor at each user terminal includes a channel estimator that estimates a downlink channel response and provides downlink channel estimation, and the downlink channel estimation may include channel gain estimate, signal-to-noise ratio estimation, and noise variance, etc. Similarly, the receiving baseband signal processor at the access point includes a channel estimator that estimates an uplink channel response and provides uplink channel estimation. The controller also controls the operation of each processing unit at the access point and the user terminal, respectively.

Fig. 3 refers to a configuration block diagram of using a transmission communication device provided by the present invention. In this configuration, the operation of the transmitting signal is performed in a time domain, and the transmission of the single carrier is performed. The block diagram of the transmitting communication device includes a physical layer zero-padding module, a scrambling module, a forward error correction code (low density parity check code) encoder module, a constellation graph mapper module, an interleaving module, an insertion guard interval and windowing module, an analog and radio frequency band module and other modules.

It should be noted that the element modules included in the block diagram of the transmitting communication device may be implemented in one or more hardware, or software, or a combination of both.

The signaling field A is transmitted in a mode of single carrier strongly. Figure 3 shows a block diagram of single-carrier transmission of the signaling field A in the case of single-user.

The physical layer zero-padding module fills each orthogonal frequency division multiplexing (OFDM) symbol code, and then the data stream is scrambled by the scrambler to improve the anti-jamming capability. After that, interleaving is performed and the data stream is modulated by a constellation mapper, wherein the modulation mode has QPSK, 16QAM, 64QAM, and 256QAM, etc. The data stream is subject to bit repetition, and then decorrelation through cyclic shift, windowing function and radio-frequency head transmission.

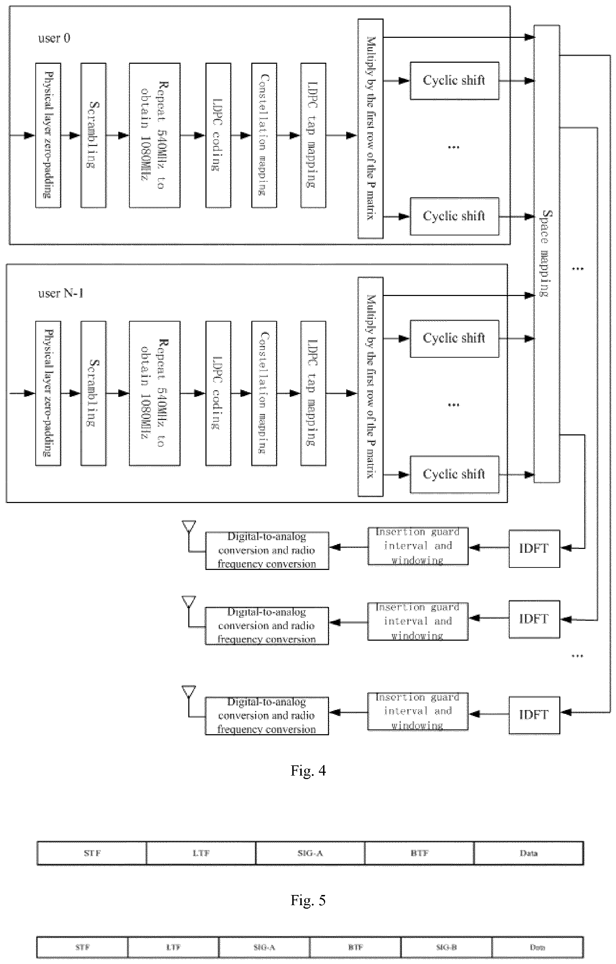

Fig. 4 refers to another configuration block diagram of using a transmission communication device provided by the present invention. The block diagram of the transmitting communication device includes a physical layer zero-padding module, a scrambling module, a forward error correction code (low density parity check code) encoder module, a constellation graph mapper module, a low density parity check code subcarrier mapping (interleaving) module, a discrete Fourier transform module, an insertion guard interval and windowing module, an analog and radio frequency band module and other modules.

The element modules included in the block diagram of the transmitting communication device may be implemented in one or more hardware, or software, or a combination of both.

The signaling field B and the data field are transmitted using an OFDM mode. Fig. 4 refers to a block diagram of OFDM transmission of the signaling field B in the case of multi-user.

The physical layer zero-padding module fills each OFDM symbol code, and then the data stream is scrambled by the scrambler to improve the anti-jamming capability. After that, the data stream is modulated by a constellation mapper. Modulation modes are QPSK (Quadrature Phase Shift Keying), 16QAM (Quadrature Amplitude Modulation), 64QAM, and 256QAM, etc. After that, the data stream is mapped through the subcarrier to complete interleaving. And then the data stream is subject to bit repetition, and then inverse discrete Fourier transform to the frequency domain, decorrelation through cyclic shift, windowing function and radio-frequency head transmission.

Fig. 5 refers to a schematic diagram of a frame structure for a wireless single-user MIMO communication system disclosed by the present invention, which includes a short training field (abbreviated as STF), a long training field (abbreviated as LTF), a signaling field A (abbreviated as SIG-A), a beam-forming training field (abbreviated as BTF), and a data field (abbreviated as Data), etc.

In the case of a single-user, the present invention only transmits the signaling field A, does not transmit the signaling field B, and transmits the length (Length) subfield in signaling field A to configure to transmit the data length.

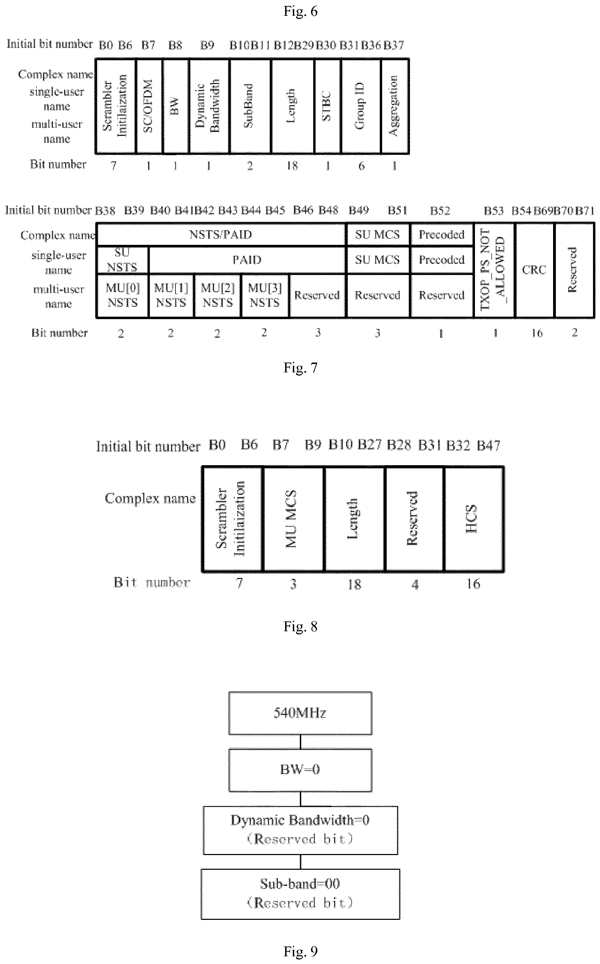

Some modules in the following modules will be used for the generation of the physical layer protocol data unit (PLCP Protocol Date Unit, abbreviated as PPDU) field of the signaling field structure as shown in Fig. 5:
a) physical layer zero-padding; b) scrambling code; c) interleaving; d) low density parity check code (LDPC) encoder; e) stream parser; f) constellation mapping; g) insertion pilot frequency; h) two 540MHz replication (if the bandwidth is greater than 540MHz); i) long training frame (LTF) orthogonalization matrix multiplication; j) low density parity check code encoding tap mapping; k) space-time block encoder; 1) insertion space-time cyclic shift diversity; m) space mapping; n) inverse discrete Fourier transform; o) insertion per-link cyclic shift diversity; p) insertion guard interval; q) windowing; and r) pulse filter.Fig. 6 refers to a schematic diagram of a frame structure of a wireless multi-user MIMO communication system disclosed by the present invention, including short training field (abbreviated as STF), long training field (abbreviated as LTF), signaling field A (abbreviated as SIG-A), beam-forming training field (abbreviated as BTF), signaling field B (abbreviated as SIG-B), and data field (abbreviated as Data), etc.

In the case of multi-user, the signaling field A transmits the length (Length) subfield to configure to transmit the maximum data length in each user and the signaling field B transmits the length (Length) subfield to configure to transmit the data length of each user.

Some modules in the following modules will be used for the generation of the physical layer protocol data unit (PLCP Protocol Date Unit, abbreviated as PPDU) field of the frame structure as shown in Fig. 5:
a) physical layer zero-padding; b) scrambling code; c) interleaving; d) low density parity check code (abbreviated as LDPC) encoder; e) stream parser; f) constellation mapping; g) insertion pilot frequency; h) two 540MHz replication (if the bandwidth is greater than 540MHz); i) long training frame (abbreviated as LTF) orthogonalization matrix multiplication; j) low density parity check code encoding tap mapping; k) space-time block encoder; 1) insertion space-time cyclic shift diversity; m) space mapping; n) inverse discrete Fourier transform; o) insertion per-link cyclic shift diversity; p) insertion guard interval; q) windowing; and r) pulse filter.Fig. 7 refers to the structure of the signaling field A disclosed in the present invention. The signaling field A completes the control and configuration of scrambling, single-carrier transmission and OFDM transmission, multi-space stream transmission, dynamic bandwidth selection, space-time block code, power saving and other basic signaling,
wherein, the signaling field A configures a scrambling state using a 7-bit scrambler initialization (Scrambler Initialization) subfield.

The signaling Field A configures single carrier transmission and OFDM transmission using a 1-bit SC/OFDM subfield.

Signaling Field A configures the functions associated with multi-spatial streams using four subfields, Including a 6-bit group ID (Group ID) subfield, a 11-bit multi-user space-time stream (abbreviated as MU NSTS) subfield, a 3-bit single-user modulation coding scheme (abbreviated as SU MCS) subfield, and a 1-bit precoded (abbreviated as Precoded) subfield.

The multi-user space-time stream (abbreviated as MU NSTS) subfield of the signaling field A includes two subfields in the case of single user as follows: a 2-bit single-user number of space-time stream (abbreviated as SU NSTS) subfield and a 9-bit partial association identifier (abbreviated as PAID) subfield.

In the case of single-user, the NSTS/PAID (partial association identifier) is divided into two parts: B38-B39 two-bit number of space-time streams of indication user and the PAID (partial association identifier) is set as the partial association identifier of the destination user.The PAID (partial association identifier) provides a brief indication of a PPDU destination address.In case of multi-user, the NSTS/PAID (partial association identifier) subfield comprises five subfields, which are 2-bit multi-user 0 space-time stream (abbreviated as MU[0]NSTS) subfield, namely B38-B39; 2-bit multi-user 1 space-time stream (abbreviated as MU[1]NSTS) subfield, namely B42-B43; a 2-bit multi-user 2 space-time stream (abbreviated as MU[2]NSTS) subfield, namely B42-B43; a multi-user 3 space-time stream (abbreviated as MU[3]NSTS) subfield, namely, B44-B45; 3-bit reserved (abbreviated as Reserved) sub-field, respectively. Signaling Field A configures the functions associated with dynamic bandwidth using three subfields, including a 1-bit bandwidth (Bandwidth) subfield, a 1-bit dynamic bandwidth (Dynamic Bandwidth) subfield, and a 2-bit sub-band identification (Sub-Band) subfield, respectively.

The 1-bit space-time block coding (abbreviated as STBC) subfield is used in the signaling field A to configure space-time block coding.

A 1-bit TXOP_PS_NOT_ALLOWED sub-field is used in the signaling field A to configure power saving.

The 18-bit length (Length) subfield is used in the signaling field B to configure to transmit the data length.

A 1-bit aggregation (Aggregation) subfield is used in the signaling field A to configure the aggregation of frame.

A 16-bit head check sequence (HCS) subfield is used in the signaling field A to configure the check of frame.

The 2-bit reserved (Reserved) subfield is used in the signaling field A.

To be specific, the meaning and configuration of various subfields are explained in details as shown in table 1.

**Table 1**

| Bit | Name of subfield | Bit number | Description |
|---|---|---|---|
| B0-B6 | Scrambler Initialization | 7 | Scrambler initialization state |
| B7 | Single-carrier/multi-carrier SC/OFDM | 1 | 0:SC transmission, 1: OFDM transmission |
| B8 | Bandwidth | 1 | 0: 540MHz, 1: 1080MHz |
| | BW | | |
| | | | |
| B9 | Dynamic Bandwidth | 1 | If BW is equal to 1 and Duplicate is equal to 1: the dynamic bandwidth is allowed to be set as 1; and the dynamic bandwidth is not allowed to be set as 0; |
| | | | Otherwise 0; |
| B10-B11 | Sub-Band | 2 | Bitmap (B10-b1 1): if Dynamic Bandwidth is equal to 1, it is designed as 10 in case of using the primary 540MHz channel; it is designed as 01 in case of using the secondary 540MHz; it is set as 11 in case of using the entire bandwidth; otherwise, it is set as 00 (reserved). |
| B12-B29 | Length | 18 | Single-user: maximum length (octets) of the data carried by PSDU, with the range of 1-162143; |
| | | | Multi-user: the maximum data length of the maximum length (octets) of the data carried by PSDU, with the range of 1-162143 |
| B30 | Space-time block coding STBC | 1 | SU-PPDU: 1 represents using STBC, 0 represents not using STBC; |
| | | | MU PPDU: 0. |
| B31-B36 | Group ID | 6 | It is designed as a value of GROUP_ID in TXVECTOR parameter. 0 or 63 represents SU PPDU; otherwise, represents MU PPDU. |
| B37 | Aggregation | 1 | 1 represents including one A-MPDU in the data PPDU of a data package; it is designed as 0. |
| B38-B48 | Number of space-time stream and partial association identifier NSTS/Partial AID | 11 | MU PPDU: NSTS is divided into 4 user positions, each position being composed of 2-bit. User *p*, where p is not less than 0 and is not more than 3, using B(38+2p) to B(39+2p). the user position p=USER_Position [u] represents the space-time stream number of the user u, wherein u=0, 1, ......, NUM-USERS-1, wherein A[b] represents the value of the bth element in an array A. The space-time stream of the user not represented in the USER_POSITION array is zero, representing the space-time stream of the user is set as follows: |
| | | | 0: 0 space-time stream |
| | | | 1: 1 space-time stream |
| | | | 2: 2 space-time stream |
| | | | 3: 3 space-time stream |
| | | | |
| | | | 4: 4 space-time stream |
| | | | B46-B48: designed as 0, reserved |
| | | | |
| | | | SU PPDU: |
| | | | B38-B39 is set as |
| | | | 0: 1 space-time stream |
| | | | 1: 2 space-time stream |
| | | | 2: 3 space-time stream |
| | | | 3: 4 space-time stream |
| | | | B40-B48 is set as |
| | | | Partial AID: it is set as PARTIAL_AID in the TXVECTOR parameter. The Partial AID provides the partial contents of the PSDU destination. |
| B49-B51 | Single-user modulation coding scheme | 3 | SU PPDU: MCS index |
| | SU MCS | | MU PPDU: reserved |
| B52 | Precoded | 1 | SU PPDU: |
| | | | 1 represents performing corresponding beam precoding for the transmitting data; 0 represents not using the beam precoding; |
| | | | MU PPDU: reserved and set as 0 |
| B53 | Power saving TXOP PS NOT-ALLOWED | 1 | 0 represents allowing the non-AP-STA to access to a sleep state in a TXOP power saving mode; otherwise, it is set as 1. |
| B54-B69 | Head check sequence HCS | 16 | SIGA check sequence |
| B70-B71 | Reserved | 2 | Reserved |

Fig. 8 refers to the structure of the signaling field disclosed in the present invention. The signaling field B configures the scrambler state using the 7-bit scrambler initialization (Scrambler Initialization) subfield.

The signaling field B configures the coding modulation scheme in the case of multi-user using the 3-bit multi-user modulation coding scheme (MU MCS) subfield. The 18-bit length (Length) subfield is used in the signaling field B to configure to transmit the data length.A 16-bit head check sequence (HCS) subfield is used in the signaling field B to configure the check of frame.The 4-bit reserved (Reserved) subfield is further used in the signaling field B.

To be specific, the meaning and configuration of various subfields are explained in details as shown in table 2.

**Table 2**

| Bit | Name of subfield | Bit number | Description |
|---|---|---|---|
| B0-B6 | Scrambler initialization | 7 | Scrambler initialization state |
| | | | |
| | Scrambler Initialization | | |
| B7-B9 | Modulation coding scheme | 3 | MCS index; |
| | MCS | | |
| B10-B27 | Length | 18 | Byte number of PSDU; range of 1-162143 |
| | Length | | |
| B28-B31 | Reserved | 4 | Reserved |
| | Reversed | | |
| B32-B47 | Head check sequence HCS | 16 | SIG-B check sequence. |

The bandwidth involved in the embodiments is one example, and the method disclosed in the present invention is not limited to application to both 540 MHz and 1080 MHz bandwidths.

Fig. 9 refers to a flow chart of a dynamic bandwidth configuration method in a field format of a signaling field A, when the transmission bandwidth is set as 540MHz, the value BW of the bandwidth (Bandwidth) subfield is equal to 0; in this case, the dynamic bandwidth (Dynamic Bandwidth) subfield Dynamic Bandwidth = 0 is set as the reserved subfield and the sub-band (Sub-Band) subfield Sub-Band = 00 is set as the reserved subfield. At this moment the transmission data channel bandwidth is 540MHz.

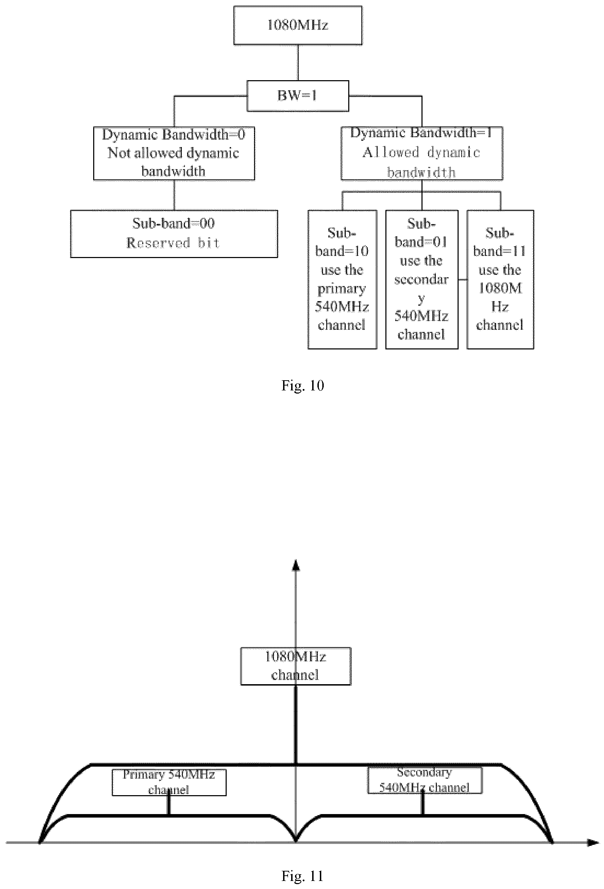

Fig. 10 refers to a flow chart of a dynamic bandwidth configuration method in a field format of another signaling field A, when the transmission bandwidth is set as 1080MHz, the value BW of the bandwidth (Bandwidth) subfield is equal to 1; and the dynamic bandwidth (Dynamic Bandwidth) subfield has the following two cases at this moment.

If the dynamic bandwidth (Dynamic Bandwidth) subfield Dynamic Bandwidth is equal to 0, the dynamic bandwidth is not allowed. The sub-band (Sub-Band) subfield Sub-Band=00 is set as a reserved subfield. At this moment, the transmission data channel bandwidth is 1080MHz, and the bit duplication is performed.

If the dynamic bandwidth (Dynamic Bandwidth) subfield Dynamic Bandwidth is equal to 1, the dynamic bandwidth is allowed. At this moment, the configuration method provides three modes for configuring the dynamic bandwidth: mode 1, when the secondary 540 MHz channel is interfered, the sub-band (Sub-band) subfield sub-band is equal to 10 and the primary540MHz channel is used to transmit data; mode 2, when the primary540MHz channel is interfered, the sub-band (Sub-band) subfield sub-band is equal to 01, the secondary 540MHz channel is used to transmit data; and mode 3, when the sub-band (Sub-band) subfield sub-band is equal to 11, the entire 1080MHz channel is used. In the use of the entire 1080MHz channel, the user can have the following three options of: first, using the primary 540MHz channel to transmit data; second, using the secondary 540MHz channel to transmit data; and third, using the entire 1080MHz channel to transmit data. This dynamic bandwidth configuration is very flexible and can improve the adaptability of different channel environments, thereby improving the bandwidth utilization.

Fig. 11 refers to a typical drawing of the channel bandwidth of the present invention in the multi-user communication, and the channel is divided into a primary 540MHz channel and a secondary 540 MHz channel as well as a full 1080MHz channel.540MHz and 1080MHz bandwidths can be used, but not limited to use.

## Claims

1. A wireless multiple input multiple output, MIMO, communication method using a frame structure adopting a signaling field of a wireless multiple input multiple output, MIMO, communication system;
the signaling field comprising a scrambler initialization subfield (B0-B6) for configuring an initial state of a scrambler; a single carrier/orthogonal frequency division multiplexing subfield (B7) for completing single carrier transmission and orthogonal frequency division multiplexing transmission; a dynamic bandwidth configuration subfield (B9); and a spatial stream configuration subfield (B30) and a length subfield (B12-B29) for configuring to transmit the data length;
the frame structure adopting the signaling field comprising a short training sequence field, a long training sequence field, a signaling field, a wave beam training sequence field and a data field, further comprising a signaling field A for completing control and configuration of the scrambler state, single carrier and orthogonal frequency division multiplexing transmission, dynamic bandwidth, user number of space-time stream, energy efficiency saving, space-time block coding, and basic transmission signaling or further comprising the signaling field A and a signaling field B for configuring to transmit the data length and modulation coding scheme of each user in the multi-user case; wherein a transmitter merely transmits the signaling field A in a communication frame when the wireless MIMO system is single-user; while a transmitter transmits the signaling field A and the signaling field B in a communication frame in sequence when the wireless MIMO system is multi-user, wherein the length subfield of the signaling field A is used for configuring to transmit a maximum data length in various users, and the length subfield in the signaling field B is used for configuring to transmit the data length and modulation coding scheme of various users; and
wherein a dynamic configuration method of the signaling field A comprises the following steps of dividing a channel into a primary channel and a secondary channel, and setting values of a bandwidth subfield, a dynamic bandwidth subfield and a sub-band identification subfield according to the situations of the primary channel and the secondary channel.

2. A method according to claim 1 , wherein the scrambler initialization subfield is 7-bit.

3. A method according to claim 1, wherein the single carrier/orthogonal frequency division multiplexing subfield is 1-bit.

4. A method according to claim 1, wherein the dynamic bandwidth configuration subfield comprises 3 subfields, wherein the 3 subfields are a 1-bit bandwidth subfield, a 1-bit dynamic bandwidth subfield and a 2-bit sub-band identification subfield respectively.

5. A method according to claim 1, wherein the spatial stream configuration subfield comprises 4 subfields, wherein the 4 subfields are a 6-bit group ID subfield, a 11 -bit number of space-time stream and partial association identifier subfield, a 3-bit single user modulation coding scheme subfield, and a 1-bit precoded subfield respectively; in the case of the single-user, the number of space-time stream and partial association identifier subfield is divided into two parts: one part is used for indicating the number of space-time stream for the user and the other part is used for providing a partial content of a media access control layer address of a destination of a physical layer protocol data unit; in the case of multi-user, the number of space-time stream and partial association identifier subfield is divided into two parts, one part is used for setting as the number of space-time stream of 4 users, and the number of space-time stream of each user is indicated by 2-bit, and the other part is a reserved subfield.

6. A method according to claim 1, wherein the length subfield is 18-bit.

7. A method according to claim 1, wherein a 18-bit length subfield is used in the signaling field B to configure to transmit the data length.

## Patentansprüche

1. Drahtloses Multiple Input Multiple Output, MIMO, - Kommunikationsverfahren, das eine Rahmenstruktur verwendet, die ein Signalisierungsfeld eines drahtlosen Multiple Input Multiple Output, MIMO, -Kommunikationssystems anwendet;
wobei das Signalisierungsfeld ein Verwürfler-Initialisierungsteilfeld (B0-B6) zum Konfigurieren eines Anfangszustandes eines Verwürflers umfasst; ein einzelnes Träger-/orthogonales Frequenzmultiplexteilfeld (B7) zum Durchführen einer Einzelträger-Übertragung und zur orthogonalen Frequenzmultiplex-Übertragung; ein dynamisches Bandbreitenkonfigurations-Teilfeld (B9); und ein Teilfeld zur räumlichen Stromkonfiguration (B30) und ein Längenteilfeld (B12-B29) zum Konfigurieren, um die Datenlänge zu übertragen;
wobei die Rahmenstruktur das Signalisierungsfeld anwendet, das ein Feld einer kurzen Trainingssequenz, ein Feld einer langen Trainingssequenz, ein Signalisierungsfeld, ein Feld einer Wellenstrahltrainingssequenz und ein Datenfeld umfasst, ferner ein Signalisierungsfeld A umfasst zum Durchführen der Steuerung und der Konfiguration des Verwürflerzustandes, der Übertragung eines Einzelträgers und eines orthogonalen Frequenzmultiplex, der dynamischen Bandbreite, der Benutzeranzahl des Raum-Zeit-Stroms, der Energieeffizienzeinsparung, der Raum-Zeitblockkodierung und einer grundlegenden Übertragungssignalisierung oder ferner das Signalisierungsfeld A und ein Signalisierungsfeld B zum Konfigurieren umfasst, um die Datenlänge und das modulationskodierte Schema jedes Benutzers im Fall mehrerer Benutzer zu übertragen;
wobei ein Sender nur das Signalisierungsfeld A in einem Kommunikationsrahmen überträgt, wenn das drahtlose MIMO-System für Einzelbenutzer ist; während ein Sender das Signalisierungsfeld A und das Signalisierungsfeld B in einem Kommunikationsrahmen nacheinander überträgt, wenn das drahtlose MIMO-System für mehrere Benutzer ist, wobei das Längen-Teilfeld des Signalisierungsfeldes A zum Konfigurieren verwendet wird, um eine maximale Datenlänge bei verschiedenen Benutzern zu übertragen, und das Längen-Teilfeld in dem Signalisierungsfeld B zum Konfigurieren verwendet wird, um das Datenlängen- und modulationskodierte Schema verschiedener Benutzer zu übertragen; und
wobei ein dynamisches Konfigurationsverfahren des Signalisierungsfelds A die folgenden Schritte des Teilens eines Kanals in einen primären Kanal und einen sekundären Kanal und das Einstellen von Werten eines Bandbreiten-Teilfeldes, eines dynamischen Bandbreiten-Teilfeldes und eines Teilband- Identifizierungs-Teilfeldes gemäß den Situationen des primären Kanals und der sekundären Kanals umfasst.

2. Verfahren nach Anspruch 1, wobei das Verwürfler-Initialisierung-Teilfeld 7 Bit aufweist.

3. Verfahren nach Anspruch 1, wobei das Einzelträger/orthogonale Frequenzmultiplex-Teilfeld 1 Bit aufweist.

4. Verfahren nach Anspruch 1, wobei das dynamische Bandbreitenkonfigurations-Teilfeld 3 Teilfelder umfasst, wobei die 3 Teilfelder ein 1-Bit-Bandbreiten-Teilfeld, ein dynamisches 1 Bit-Bandbreiten-Teilfeld beziehungsweise ein 2-Bit-Teilband-Identifikationsteilfeld sind.

5. Verfahren nach Anspruch 1, wobei das Teilfeld der räumlichen Stromkonfiguration 4 Teilfelder umfasst, wobei die 4 Teilfelder ein 6-Bit-Gruppen-ID-Teilfeld, ein 11-Bit-Teilfeld der Anzahl von Raum-Zeit-Strom und teilweiser Zuordnungskennung, ein 3-Bit-Teilfeld eines Einzelbenutzer-Modulationskodierschemas beziehungsweise ein vorkodiertes 1-Bit-Teilfeld sind; im Fall des Einzelbenutzers das Teilfeld der Anzahl des Raum-Zeit-Strom und teilweisen Zuordnungskennung in zwei Teile unterteilt ist: ein Teil wird verwendet zum Angeben der Anzahl des Raum-Zeit-Strom für den Benutzer und der andere Teil wird verwendet zum Bereitstellen eines Teilinhalts einer Medienzugriffs-Steuerschichtadresse eines Ziels einer physikalischen Schichtenprotokolldateneinheit; im Fall von mehreren Benutzern ist das Teilfeld der Anzahl des Raum-Zeit-Strom und der teilweisen Zuordnungskennung in zwei Teile unterteilt: ein Teil wird verwendet zum Einstellen als Anzahl des Raum-Zeit-Strom von 4 Benutzern und die Anzahl des Raum-Zeit-Strom jedes Benutzers wird durch 2-Bit angegeben, und der andere Teil ist ein reserviertes Teilfeld.

6. Verfahren nach Anspruch 1, wobei das Längen-Teilfeld 18 Bit aufweist.

7. Verfahren nach Anspruch 1, wobei ein 18-Bit-Längen Teilfeld in dem Signalisierungsfeld B verwendet wird, um zu konfigurieren, die Datenlänge zu übertragen.

## Revendications

1. Procédé de communication à entrées multiples et sorties multiples, MIMO, sans fil à l'aide d'une structure de trame adoptant un champ de signalisation d'un système de communication à entrées multiples et sorties multiples, MIMO, sans fil ;
le champ de signalisation comprenant un sous-champ d'initialisation d'embrouilleur (B0-B6) pour configurer un état initial d'un embrouilleur ; un sous-champ de multiplexage par répartition orthogonale de la fréquence/porteuse unique (B7) pour achever une transmission à porteuse unique et une transmission à multiplexage par répartition orthogonale de la fréquence ; un sous-champ de configuration de bande passante dynamique (B9) ; et un sous-champ de configuration de flux spatial (B30) et un sous-champ de longueur (B12-B29) pour configurer une transmission de la longueur de données ;
la structure de trame adoptant le champ de signalisation comprenant un champ de séquence d'apprentissage court, un champ de séquence d'apprentissage long, un champ de signalisation, un champ de séquence d'apprentissage de faisceau d'ondes et un champ de données, comprenant en outre un champ de signalisation A pour achever la commande et la configuration de l'état d'embrouilleur, la transmission à porteuse unique et à multiplexage par répartition orthogonale de la fréquence, la bande passante dynamique, le nombre d'utilisateurs d'un flux espace-temps, l'économie d'efficacité énergétique, le codage de bloc espace-temps, et la signalisation de transmission de base ou comprenant en outre le champ de signalisation A et un champ de signalisation B pour configurer une transmission de la longueur de données et la technique de codage de modulation de chaque utilisateur dans le cas d'utilisateurs multiples ;
dans lequel un émetteur transmet seulement le champ de signalisation A dans une trame de communication lorsque le système MIMO sans fil est à utilisateur unique ; tandis qu'un émetteur transmet le champ de signalisation A et le champ de signalisation B dans une trame de communication en séquence avec le système MIMO sans fil est à utilisateurs multiples, dans lequel le sous-champ de longueur du champ de signalisation A est utilisé pour configurer une transmission d'une longueur de données maximale dans divers utilisateurs, et le sous-champ de longueur dans le champ de signalisation B est utilisé pour configurer une transmission de la longueur de données et la technique de codage de modulation de divers utilisateurs ; et
dans lequel un procédé de configuration dynamique du champ de signalisation A comprend les étapes suivantes de division d'un canal en un canal primaire et en un canal secondaire, et de réglage de valeurs d'un sous-champ de bande passante, d'un sous-champ de bande passante dynamique et d'un sous-champ d'identification de sous-bande selon les situations du canal primaire et du canal secondaire.

2. Procédé selon la revendication 1, dans lequel le sous-champ d'initialisation d'embrouilleur est de 7 bits.

3. Procédé selon la revendication 1, dans lequel le sous-champ de multiplexage par répartition orthogonale de la fréquence/porteuse unique est de 1 bit.

4. Procédé selon la revendication 1, dans lequel le sous-champ de configuration de bande passante dynamique comprend 3 sous-champs, les 3 sous-champs étant un sous-champ de bande passante de 1 bit, un sous-champ de bande passante dynamique de 1 bit et un sous-champ d'identification de sous-bande de 2 bits, respectivement.

5. Procédé selon la revendication 1, dans lequel le sous-champ de configuration de flux spatial comprend 4 sous-champs, les 4 sous-champs étant un sous-champ d'ID de groupe de 6 bits, un sous-champ d'identifiant d'association partielle et de nombre de flux espace-temps de 11 bits, un sous-champ de technique de codage de modulation à utilisateur unique de 3 bits et un sous-champ pré-codé de 1 bit, respectivement ; dans le cas de l'utilisateur unique, le sous-champ d'identifiant d'association partielle et de nombre de flux espace-temps est divisé en deux parties : une partie est utilisée pour indiquer le nombre de flux espace-temps pour l'utilisateur et l'autre partie est utilisée pour fournir un contenu partiel d'une adresse de couche de contrôle d'accès au support d'une destination d'une unité de données de protocole de couche physique ; dans le cas d'utilisateurs multiples, le sous-champ d'identifiant d'association partielle et de nombre de flux espace-temps est divisé en deux parties, une partie est utilisée pour un réglage en tant que nombre de flux espace-temps de 4 utilisateurs, et le nombre de flux espace-temps de chaque utilisateur est indiqué par 2 bits, et l'autre partie est un sous-champ réservé.

6. Procédé selon la revendication 1, dans lequel le sous-champ de longueur est de 18 bits.

7. Procédé selon la revendication 1, dans lequel un sous-champ de longueur de 18 bits est utilisé dans le champ de signalisation B pour configurer une transmission de la longueur de données.
